# EUROPÄISCHE PATENTSCHRIFT

(11) **EP 4 230 892 B1**
(45) Veröffentlichungstag und Bekanntmachung des Hinweises auf die Patenterteilung: **15.01.2025**
(21) Anmeldenummer: 23156833.8
(22) Anmeldetag: 15.02.2023
(51) Int. Cl.: F16D 63/00, F16D 55/02, B60T 1/00

(54) **EINSTIEGSBRÜCKE**
BOARDING BRIDGE
PONT D'EMBARQUEMENT

(30) Priorität: 21.02.2022 DE 202022100968 U
(43) Veröffentlichungstag der Anmeldung: 23.08.2023
(73) Patentinhaber: BKM Stahl- und Anlagenbau GmbH, 31234 Edemissen (DE)
(72) Erfinder: KULBROCK, Achim, 31234 Edemissen (DE); BÜHRIG, Bastian, 31234 Edemissen (DE); BIEDENKAPP, Lothar, 31234 Edemissen (DE)
(74) Vertreter: Haverkamp Patentanwälte PartG mbB

(56) Entgegenhaltungen:
- CN-A- 106 494 638
- CN-A- 108 216 674
- CN-U- 204 415 746
- CN-U- 206 171 839

## Beschreibung

Die Erfindung betrifft eine Einstiegsbrücke mit einem Brückenkopf und mit einer um einen Abschnitt des Brückenkopfes mittels eines Kabinenschwenkantriebes verschwenkbaren Kabine, welcher Kabinenschwenkantrieb als Kettenantrieb ausgelegt ist, bei dem die zumindest eine Kette brückenkopfseitig gehalten und der motorische Antrieb mit einem eine Kette kämmenden Antriebsritzel kabinenseitig angeordnet sind, wobei dem Kabinenschwenkantrieb eine die Schwenkbarkeit der Kabine gegenüber dem Brückenkopf blockierende Bremseinrichtung zugeordnet ist, die durch einen an eine Steuereinheit angeschlossenen und von dieser Schaltbefehle empfangenden Bremsenöffnungsaktor gegen eine Rückstellkraft geöffnet werden kann und bei deaktiviertem Bremsenöffnungsaktor durch die durch den Öffnungsvorgang gespeicherte Rückstellkraft selbsttätig schließt.

Fluggastbrücken sind Einstiegsbrücken und dienen als Zugang zu einem vor einem Terminal parkenden Flugzeug. Derartige Fluggastbrücken verbinden, wenn an einem Flugzeugeinstieg angedockt, das Terminal mit dem Flugzeug. Eine solche Fluggastbrücke verfügt über einen Passagiertunnel. Dieser ist hinsichtlich seiner Länge und seiner Ausrichtung vom Terminal einrichtbar. Zumeist ist Teil der Fluggastbrücke eine am Terminal angeordnete Rotunde, gegenüber der die übrigen Bestandteile der Fluggastbrücke verschwenkt werden können. Teil des Passagiertunnels ist des Weiteren der Brückenkopf. In diesen führt der Passagiertunnel. Die Fluggastbrücke ist im Bereich des Brückenkopfes in ihrer Höhe einrichtbar, um die Höhe des Brückenkopfes an die Höhe des Einstieges des jeweiligen Flugzeuges anpassen zu können. Zur Verbindung des Brückenkopfes mit einem Flugzeug verfügt eine solche Fluggastbrücke über eine Kabine, die mitunter auch mit einer Universalschnittstelle ausgerüstet ist. Die Kabine ist gegenüber dem Brückenkopf verschwenkbar, damit die zum Flugzeug weisende Kabinenseite parallel zur Außenhaut des Flugzeugrumpfes ausgerichtet werden kann. Eine solche Kabine verfügt über einen hinsichtlich seiner Länge einrichtbaren Kabinenabschnitt und ist mit Sensoren ausgestattet, um ein sanftes Andocken der zum Flugzeug weisenden Seite der Kabine an der Außenhaut desselben zu gewährleisten. In der Kabine einer solchen Fluggastbrücke befindet sich der Fahrerstand zum Bedienen der Fluggastbrücke, was auch eine Bewegung der Kabine gegenüber dem Brückenkopf umfasst. Gleiches gilt für Einstiegsbrücken, die als Schiffgastbrücken eingesetzt werden.

Der Kabinenschwenkantrieb einer solchen etwa als Fluggastbrücke ausgebildeten Einstiegsbrücke, mit dem die Kabine gegenüber dem Brückenkopf verschwenkt werden kann, ist als Kettenantrieb ausgelegt. Dabei ist die Kette ortsfest an der Unterseite des Brückenkopfes, ein Ringsegment bildend, gespannt. Kettenspanner sorgen für eine gleichbleibende Kettenspannung. Kabinenseitig dient ein Elektromotor und ein von diesem angetriebenes Ritzel zum Bewirken der gewünschten Verschwenkung der Kabine gegenüber dem Brückenkopf. Das Ritzel kämmt die Kette. Die Kabine ist an dem Brückenkopf durch entsprechende Führungen schwenkbar gehalten.

Zur Erhöhung der Betriebssicherheit eines solchen Kabinenschwenkantriebes ist man seit geraumer Zeit dazu übergegangen, zwei übereinanderliegende Ketten einzusetzen, die von zwei aus derselben Antriebswelle sitzenden Antriebsritzeln gekämmt werden. Durch zwei Ketten wird die Betriebssicherheit deswegen verbessert, da bei Versagen einer Kette, beispielsweise in Folge eines Kettenbruches, der Antriebsstrang erhalten und die Kabine durch den Eingriff des anderen Antriebsritzels in die andere Kette fixiert bleibt. Ein Abriss im Antriebsstrang würde zu unkontrollierten Pendelbewegungen der Kabine gegenüber dem Brückenkopf führen, vor allem dann, wenn der Brückenkopf nicht horizontal ausgerichtet ist, was die Regel sein dürfte. Ein unkontrolliertes Auspendeln gegenüber dem Brückenkopf kann im ungünstigen Fall zur Folge haben, dass in dem Brückenkopf oder der Kabine befindliche Personen aus der vorderseitig offenen Kabine herausfallen. Beim Bewegen und Einrichten einer solchen Fluggastbrücke befindet sich zumindest eine Person am Fahrerstand in der Kabine. Des Weiteren kann es zu Sachschäden an der Brücke sowie zu Schäden an weiteren Flugzeugabfertigungsgeräten kommen.

Auch wenn durch Vorsehen eines Doppelkettenantriebes die Betriebssicherheit einer solchen Fluggastbrücke verbessert werden konnte, kann ein Riss beider Ketten oder ein Wellenbruch immer noch zu einer für eine in der Kabine befindlichen Person nicht ungefährlichen Pendelbewegung derselben gegenüber dem Brückenkopf kommen. Befindet sich die Kabine in einem solchen Fall benachbart zu einem Flugzeugrumpf, können auch Beschädigungen des Flugzeugrumpfes nicht ausgeschlossen werden.

Aus EP 2 801 529 A1 ist eine Einstiegsbrücke für Flugzeuge und Schiffe mit einem Haltesystem bekannt. Zusätzlich zu dem Kabinenschwenkantrieb verfügt diese vorbekannte Einstiegsbrücke über einen Arretiermechanismus, durch den die Schwenkbewegung der Kabine gegenüber dem Brückenkopf blockiert werden kann. Zu diesem Zweck ist an die unter den Boden des Brückenkopfes reichenden Schwenkarme der Kabine im Bereich ihrer Lagerachse ein Zahnkranz angeordnet, dessen Zahnung von den Schwenkarmen wegweist. Bei einer Schwenkbewegung der Kabine gegenüber dem Brückenkopf wird der Zahnkranz nicht mit verschwenkt. Zum Zwecke einer Arretierung der Schwenkbewegung der Kabine befindet sich unterhalb des Bodens des Brückenkopfes eine translatorisch bewegbare Arretierlanze mit einer entsprechend geformten Spitze, die ausgebildet ist, um zwischen zwei aufeinanderfolgende Zähne des Zahnkranzes eingreifen zu können. Wenn die Kabine gegenüber dem Brückenkopf verschwenkt werden soll, befindet sich diese Arretierlanze in einer durch eine Druckfeder vorgespannten Stellung, in der ihre Eingriffsspitze nicht in die Zahnung des Zahnkranzes eingreift. Gekoppelt ist die Arretierlanze an einen Kettenbruchsensor, durch den die Arretierlanze zum Eingriff mit ihrer Spitze zwischen zwei Zähne des Zahnkranzes aktiviert wird. Gemäß einem Ausführungsbeispiel erfolgt dieses durch einen das rückseitige Ende der Arretierlanze mit der Kette des Kabinenschwenkantriebes verbundenen Draht, durch den die Arretierlanze in ihrer vorgespannten, deaktivierten Stellung gehalten wird. Alternativ kann auch ein Hubmagnet Sorge dafür tragen, dass die Arretierlanze bei einer Verschwenkbewegung der Kabine gegenüber dem Brückenkopf in ihrer ausgerückten, deaktivierten Stellung ist.

In diesem Stand der Technik wird auf eine Bremseinrichtung verwiesen, die ebenfalls dem Zweck einer Arretierung der Kabine gegenüber dem Brückenkopf dienen soll. Hierbei handelt es sich um die in CN 201777389 U1 offenbarte Fluggastbrücke. Eingesetzt wird eine elektromagnetische Bremse, die, wenn aktiviert, mit ihrem einen Bremsbeleg gegen einen brückenkopfseitig gehaltenen Führungsflansch wirkt. Auf diesem Führungsflansch ist auch die Kabine mit Rollen abgestützt. Aufgrund von auf diesem Flansch befindlichen Schmiermitteln wird eine derartige Bremseinrichtung in EP 2 801 529 A1 als nicht den Anforderungen entsprechend beschrieben. Die Bremseinrichtung der Einstiegsbrücke gemäß CN 201777389 U1 arbeitet nach einem anderen Prinzip als die in EP 2 801 529 A1 beschriebene. Die Bremseinrichtung der CN 201777389 U1 wird zum Bewirken des Bremsvorganges aktiviert. Das Aktivierungssignal wird von einer Steuereinrichtung bereitgestellt. Aktiviert wird diese Bremseinrichtung bei Feststellen eines Kettenbruches.

CN 108216674 A offenbart eine Einstiegsbrücke, deren Bremskonzept demjenigen entspricht, wie dieses vorstehend zu EP 2 801 529 A1 beschrieben ist. Diese Einstiegsbrücke verfügt über eine erste Kette als Antriebskette. Ein Ritzel einer Antriebseinrichtung kämmt diese Kette und sorgt für die gewünschte Schwenkbewegung der Kabine gegenüber dem Brückenkopf. Diese Einstiegsbrücke verfügt über eine zweite Kette, die als Bremskette dient. Eine einen Elektromagneten und Rückstellelemente umfassende Bremseinrichtung kämmt mit einem Bremsritzel die Bremskette. Damit ist eine Schwenkbewegung der Kabine gegenüber dem Brückenkopf blockiert, wenn der als Bremsenöffnungsaktor eingesetzte Elektromagnet nicht geöffnet ist. Diese Bremseinrichtung ist aufwendig in Bezug auf die erforderlichen Komponenten. Zudem kann die Betriebssicherheit bei lockerer oder gebrochener Bremskette nicht gewährleistet werden.

Aus CN 206171839 U ist eine weitere Einstiegsbrücke bekannt. Die Bremseinrichtung dieser vorbekannten Einstiegsbrücke schließt durch Ansteuerung mit einem Steuersignal, wenn ein Kettenfehler, etwa eine nicht hinreichende Kettenspannung, detektiert worden ist. Damit arbeitet auch diese Einstiegsbrücke nach einem anderen Bremsenaktivierungskonzept als in aus EP 2 801 529 A1 beschriebene Einstiegsbrücke.

Ausgehend von diesem diskutierten Stand der Technik liegt der Erfindung daher die Aufgabe zu Grunde, eine beispielsweise als Fluggastbrücke ausgelegte Einstiegsbrücke mit einer Bremseinrichtung zum Blockieren einer Verschwenkbewegung der Kabine gegenüber dem Brückenkopf, die zum Verschwenken durch einen Bremsenöffnungsaktor deaktiviert, mithin gelöst wird, und bei nicht aktiviertem Bremsenöffnungsaktor eine solche Verschwenkbewegung verhindert ist, vorzuschlagen, bei der nicht nur das Eintreten einer unerwünschten Pendelbewegung der Kabine gegenüber dem Brückenkopf infolge etwa eines Ketten- oder eines Wellenbruches, auch bei einem Doppelwellenantrieb als Kabinenschwenkantrieb vermieden ist, sondern die zudem kleiner bauend als in EP 2 801 529 A1 vorgeschlagen, und verlässlicher arbeitend ist.

Gelöst wird diese Aufgabe erfindungsgemäß durch eine eingangs genannte, gattungsgemäße Fluggastbrücke, bei der die Bremseinrichtung einen nach Art einer Scheibenbremse arbeitenden, kabinenseitig gehaltenen Bremssattel als Bremsenöffnungaktor mit zwei Bremsbeläge tragenden Bremsbacken und einen zwischen die Bremsbeläge eingreifenden brückenkopfseitig angeordneten, scheibenförmigen Ringsegmentkörper umfasst, gegen den die Bremsbacken mit ihren Bremsbelägen bei deaktiviertem Bremssattel zum Blockieren einer Schwenkbewegung der Kabine gegenüber dem Brückenkopf wirken und von dem die Bremsbacken mit ihren Bremsbelägen bei aktiviertem Bremssattel gelöst sind.

Diese beispielsweise als Fluggastbrücke ausgelegte und eingesetzte Einstiegsbrücke verfügt über eine Bremseinrichtung, mit der die Verschwenkbarkeit der Kabine gegenüber dem Brückenkopf blockiert werden kann. Dabei ist die Bremseinrichtung so ausgelegt, dass diese, wenn nicht aktiviert, geschlossen und damit eine Schwenkbewegung der Kabine gegenüber dem Brückenkopf blockiert ist. Ist eine Verschwenkung der Kabine gegenüber dem Brückenkopf vorgesehen, wird die Bremseinrichtung mittels eines Bremsenöffnungsaktors geöffnet. Dieses Öffnen der Bremse erfolgt gegen die Rückstellkraft eines oder mehrerer Rückstellelemente. Sobald der Bremsenöffnungsaktor deaktiviert wird, sorgt die beim Öffnen der Bremse gespeicherte Rückstellkraft für ein selbsttätiges Schließen der Bremse. Die Rückstellkraft kann beispielsweise in Druckfedern oder Druckfederpaketen gespeichert werden. Der Bremsenöffnungsaktor ist an eine Steuereinheit angeschlossen. Der Bremsenöffnungsaktor wird von der Steuereinheit angesteuert, so dass dieser von der Steuereinheit Schaltbefehle zu seiner Aktivierung bzw. Deaktivierung empfängt. Diese der Steuereinheit zugeordnete Funktionalität kann durchaus der ohnehin vorhandenen Steuereinheit des Fahrerstandes der Fluggastbrücke zugeordnet werden.

Als besonders vorteilhaft wird angesehen, dass aufgrund der Konzeption der Bremseinrichtung diese, wenn durch den Bremsenöffnungsaktor gelöst und sich somit die Einstiegsbrücke in einem Zustand befindet, dass die Kabine gegenüber dem Brückenkopf verschwenkbar ist, auch bei einem Stromausfall selbsttätig schließt, wodurch eine Verschwenkbewegung der Kabine gegenüber dem Brückenkopf nicht mehr möglich ist. Des Weiteren kann die Bremseinrichtung im Unterschied zu der aus EP 2 801 529 A1 vorbekannten Einstiegsbrücke bei jeder Wartung getestet werden, ohne anschließend weitere Nacharbeiten vornehmen zu müssen. Nach einem Bremstest muss manuell die gesamte Mechanik zurückgestellt werden.

Die Bremseinrichtung umfasst einen nach Art einer Scheibenbremse arbeitenden Bremssattel (Bremszange). Dieser ist typischerweise kabinenseitig angeordnet. Mit dem Bremssattel bzw. seinen beiden mit jeweils einem Bremsbelag ausgerüsteten Bremsbacken wirkt ein scheibenförmiger Ringsegmentkörper zusammen, der zwischen die Bremsbacken des nach Art einer Zange arbeitenden Bremssattels eingreift. Dieser Ringsegmentkörper ist typischerweise brückenkopfseitig angeordnet. In aller Regel weisen Brückenköpfe von derartigen als Fluggastbrücken ausgelegten Einstiegsbrücken für die Abstützung der Kabine und zur Führung derselben sowie für die Kettenführung unterhalb des Bodens des Brückenkopfes eine der Außenkontur des Brückenkopfes folgenden Winkel auf, dessen horizontaler, in radialer Richtung nach außen weisender Schenkel als Stützflansch für die Kabinenführung am Brückenkopf genutzt wird. Dieser Flansch stellt bei einem bevorzugten Ausführungsbeispiel einer solchen Fluggastbrücke den scheibenförmigen Ringsegmentkörper dar, der zwischen die Bremsbacken des Bremssattels greift. Der Rücken dieses Winkels wird in aller Regel genutzt, um darin die beiden Ketten des Kettenantriebes, typischerweise in entsprechenden Kettenführungskanälen entlangzuführen.

Der Bremssattel selbst ist gemäß einem Ausführungsbeispiel elektromagnetisch arbeitend ausgelegt. Dies bedeutet, dass die Bremse elektromagnetisch durch Bewegen der Bremsbacken voneinander weg geöffnet wird. Durchaus möglich ist es auch andere Bremsenöffnungsaktor en einzusetzen, beispielsweise auch elektromotorisch, hydraulisch oder pneumatisch arbeitende. Vorteilhaft an dem Einsatz eines elektrisch arbeitenden Bremsenöffnungsaktors, beispielsweise eines elektromagnetisch arbeitenden Bremssattels ist die kompakte Auslegung und dass keine zusätzlichen Fluidleitungen gelegt werden müssen, wie dieses bei hydraulischen oder pneumatisch arbeitenden Systemen der Fall wäre.

Vorteilhaft bei einer solchen Auslegung einer Arretierung der Kabine gegenüber dem Brückenkopf ist, dass auch bei einem sich in einer Verschwenkbewegung befindlichen Kabine eintretenden Kettenbruch eine wirksame Blockierung der Schwenkbewegung erfolgt. Dies ist bei einer mit einem Zahnkranz und einer Arretierlanze als Arretiereinrichtung ausgerüsteten Fluggastbrücke anders. Ein sicherer Eingriff der Arretierlanze in den Zwischenraum zwischen zwei Zähnen des Zahnkranzes kann nur bei ruhendem oder sehr langsam drehendem Zahnkranz erfolgen. Auch erfolgt bei der erfindungsgemäßen Einstiegsbrücke eine wirksame Blockierung unabhängig von der Stellung der Kabine gegenüber dem Brückenkopf. Bei Arretiereinrichtungen mit einem Zahnkranz kann es vorkommen, dass bei nicht bewegtem Zahnkranz die Arretierlanze auf einen Zahn und nicht in einen Zahnzwischenraum trifft, wenn eine Arretierung herbeigeführt werden soll. Vorteilhaft bei der erfindungsgemäßen Einstiegsbrücke ist zudem, dass der Bremssattel kabinenseitig gehalten und vorzugsweise mit einem der Umrisskontur des Brückenkopfes folgenden Ringsegmentkörper zusammenwirkt. Infolge des relativ großen Abstandes bei einer solchen Auslegung der Einstiegsbrücke zwischen der Schwenkachse der Kabine und diesem Ringsegmentkörper genügen bereits geringere Kräfte, um eine wirksame Blockierung einer Verschwenkung der Kabine gegenüber dem Brückenkopf blockieren zu können.

Das Ausrüsten einer Einstiegsbrücke mit einer solchen Bremseinrichtung erlaubt eine Nutzung dieser zum Sichern der Kabine gegenüber einer ungewünschten Schwenkbewegung gegenüber dem Brückenkopf, wenn während eines Betriebes, insbesondere eines Schwenkbetriebes der Kabine gegenüber dem Brückenkopf der Antriebsstrang beispielsweise durch einen Ketten- oder einen Wellenbruch unterbrochen wird. Die Unterbrechung des Antriebsstranges wird durch eine Steuereinheit erfasst. In einem solchen Fall wird unverzüglich der Bremsenöffnungsaktor deaktiviert, so dass in Folge des dann selbsttätigen Schließens der Bremseinrichtung eine Schwenkeinrichtung der Kabine gegenüber dem Brückenkopf blockiert bzw. nicht mehr möglich ist. Unerwünschte Pendelbewegungen im Falle einer Unterbrechung des Antriebsstranges des Kabinenschwenkantriebes können auf diese Weise wirksam vermieden werden. In gleicher Weise kann bei der Inbetriebnahme des Fahrerstandes zum Verstellen der Fluggastbrücke überprüft werden, ob eine Verschwenkbarkeit der Kabine gegenüber dem Brückenkopf freigeschaltet werden kann. Wird im Antriebsstrang ein Fehler, beispielsweise ein Ketten- oder Wellenbruch, festgestellt, wird diese Funktionalität nicht freigeschaltet.

Vorteilhaft an einer solchen, dem Kabinenschwenkantrieb zugeordneten Bremseinrichtung ist zudem, dass beispielsweise in der Parkposition des Brückenkopfes die Kabine nicht allein über den Antriebsstrang hinsichtlich einer Schwenkbewegung gegenüber dem Brückenkopf blockiert ist, sondern durch die dann geschlossene Bremseinrichtung. Es kommt mitunter vor, dass Bodenfahrzeuge die dem Brückenkopf zugeordnete Bodengruppe tuschieren. In die Einstiegsbrücke und damit in den Brückenkopf eingeleitete Schläge werden in Folge der geschlossenen Bremseinrichtung nicht auf den Antriebsstrang des Kabinenschwenkantriebes übertragen. Dieser ist daher weniger bruch- und verschleißgefährdet. Und ein unbeabsichtigtes Pendeln der Kabine wird vermieden. Personen- oder Sachschäden etwa am Flugzeug werden somit minimiert.

Überdies braucht bei einer solchen Einstiegsbrücke mit einer dem Kabinenschwenkantrieb zugeordneten Bremseinrichtung der Kettenantrieb nicht notwendigerweise als Doppelkettenantrieb ausgelegt zu sein, da die durch den zweiten Kettenantrieb bereitgestellte Verbesserung der Sicherheitsfunktion gegenüber einem Einkettenantrieb von der Bremseinrichtung nicht nur übernommen, sondern weitaus besser gelöst wird. Besonders zu erwähnen ist hier die Möglichkeit der Nachrüstung bestehender Einstiegsbrücken mit einer solchen Bremseinrichtung.

In einer Ausführung einer solchen Einstiegsbrücke ist der Bremseinrichtung zum indest ein an die Steuereinheit angeschlossener Kettenbruchsensor zugeordnet. Dieser dient zum Erfassen der aktuellen Kettenspannung der Kette des Kabinenschwenkantriebes. Die Kettenspannung kann durch eine Erfassung der Position der Kette zu dem Kettenbruchsensor, mithin durch den Abstand der Kette zu dem Sensorkopf des Kettenbruchsensors erfasst werden. Bei gespannter Kette ist der Abstand der Kette im Messabschnitt geringer als bei nachlassender Kettenspannung oder gar bei einem Kettenbruch. Die an die Steuereinheit von dem Kettenbruchsensor übermittelte IST-Kettenposition bzw. IST-Kettenspannung wird von der Steuereinheit ausgewertet, und zwar in Bezug auf eine SOLL-Kettenposition bzw. SOLL-Kettenspannung. Dieses kann durch eine Vergleichsoperation erfolgen. Vorgegeben ist eine Abweichung in der Kettenspannung zwischen der IST-Kettenposition bzw. der IST-Kettenspannung und der SOLL-Kettenposition bzw. der SOLL-Kettenspannung. Überschreitet die Abweichung des ISTWertes von dem SOLL-Wert den vorgegebenen Abweichungsschwellwert, setzt die Steuereinheit zum Deaktivieren des vorhandenen Öffnungsaktors einen Steuerbefehl ab mit der Folge, dass der Bremsenöffnungsaktor deaktiviert wird und daher die Bremseinrichtung sofort schließt.

Bei einem solchen als Kettenantrieb ausgelegten Kabinenschwenkantriebes wird die Kette typischerweise in einer Kettenschlaufe um das Antriebsritzel des Antriebsmotors gelegt. Um dieses zu ermöglichen, sind in Längserstreckung der Kette zwei voneinander beabstandete Kettenumlenckörper vorgesehen. Bei diesen kann es sich beispielsweise um Umlenkritzel oder Umlenkrollen handeln. Das Antriebsritzel befindet sich zwischen diesen beiden Umlenkkörpern mit einem radialen Abstand zu diesen und damit zu dem eigentlichen Verlauf der Kette. Als bevorzugte Position zum Positionieren eines Kettenbruchsensors werden die Kettenabschnitte zwischen dem Antriebsritzel und einem solchen Kettenumlenkkörper angesehen. An zumindest einem solchen Abschnitt ist ein Kettenbruchsensor angeordnet. Vorzugsweise werden beide diesbezüglichen Kettenabschnitte genutzt, um diesen jeweils einen Kettenbruchsensor zuzuordnen. Dies erhöht die Sicherheit des Messergebnisses.

In einer bevorzugten Weiterbildung ist vorgesehen, dass zusätzlich zu dem einen, vorzugsweise den beiden, einem Kettenumlenkkörper zugeordneten Kettenbruchsensoren zumindest ein weiterer Kettenbruchsensor vorgesehen ist. Während der zumindest eine Kettenbruchsensor am Kettenumlenckörper kabinenseitig angeordnet ist, ist der zumindest eine weitere Kettenbruchsensor brückenkopfseitig gehalten. Vorzugsweise ist dieser zumindest eine weitere Kettenbruchsensor an dem die zumindest eine Kette führenden Ringsegmentkörper befestigt. Bei einer solchen Auslegung der Einstiegsbrücke ist die Erfassungsgenauigkeit eines Kettenspannungsfehlers verbessert mit der Folge, dass eine Blockierung der Kabine gegenüber dem Brückenkopf während eines Schwenkbetriebes der Kabine gegenüber dem Brückenkopf quasi unverzüglich erfolgt, ohne dass zugewartet werden muss, bis der Kettenspannungsverlust sich aufgrund der Ritzelumlenkung zu einen kabinenseitig oder brückenkopfseitig gehaltenen Sensor fortpflanzt. Eine Blockierung des Schwenkbetriebes der Kabine gegenüber dem Brückenkopf ist somit spontan und innerhalb von 1° der Bewegung gegenüber dem Brückenkopf möglich.

Die Kettenbruchsensoren sind typischerweise in Reihe geschaltet, sodass eine Blockierung der Schwenkbewegung der Kabine gegenüber dem Brückenkopf ausgelöst wird, wenn allein bei einem der mehreren Kettenbruchsensoren ein entsprechender Kettenspannungsverlust detektiert wird.

Die Kettenbruchsensoren sind vorzugsweise bezüglich der daran vorbeigeführten Kette berührungslos arbeitend ausgelegt. In einer Ausgestaltung eines solchen Kettenbruchsensors werden induktive Näherungssensoren verwendet.

Die Erfindung ist nachfolgend unter Bezugnahme auf die beigefügten Figuren beschrieben. Es zeigen:
- **Fig. 1:**: Eine Seitenansicht einer als Fluggastbrücke ausgelegten Einstiegsbrücke ohne die bodenseitig diese abstützende Bodengruppe,
- **Fig. 2:**: eine Draufsicht auf den flugzeugseitigen Endbereich der Fluggastbrücke der Figur 1 mit seinem Brückenkopf und der daran angeschlossenen Kabine,
- **Fig. 3:**: eine perspektivische Ansicht von unten auf den Boden des Brückenkopfes mit der schwenkbar daran angeschlossenen Kabine zum Darstellen von Komponenten des Kabinenschwenkantriebes,
- **Fig. 4:**: eine vergrößerte Darstellung eines Bremssattels als Teil des Kabinenschwenkantriebes ,
- **Fig. 5:**: eine zum Teil geschnittene Darstellung der in Figur 4 gezeigten Komponente,
- **Fig. 6:**: eine Draufsicht auf das kabinenseitig unterhalb des Bodens gehaltene Antriebsaggregat, des Kabinenschwenkantriebes, dessen Eingriff in die brückenkopfseitig gehaltenen Antriebsketten und benachbart zu den Antriebsketten angeordnete Kettenbruchsensoren und
- **Fig. 7:**: eine Unteransicht des Brückenkopfes und der daran angeschlossenen Kabine der Einstiegsbrücke der vorstehenden Figuren.

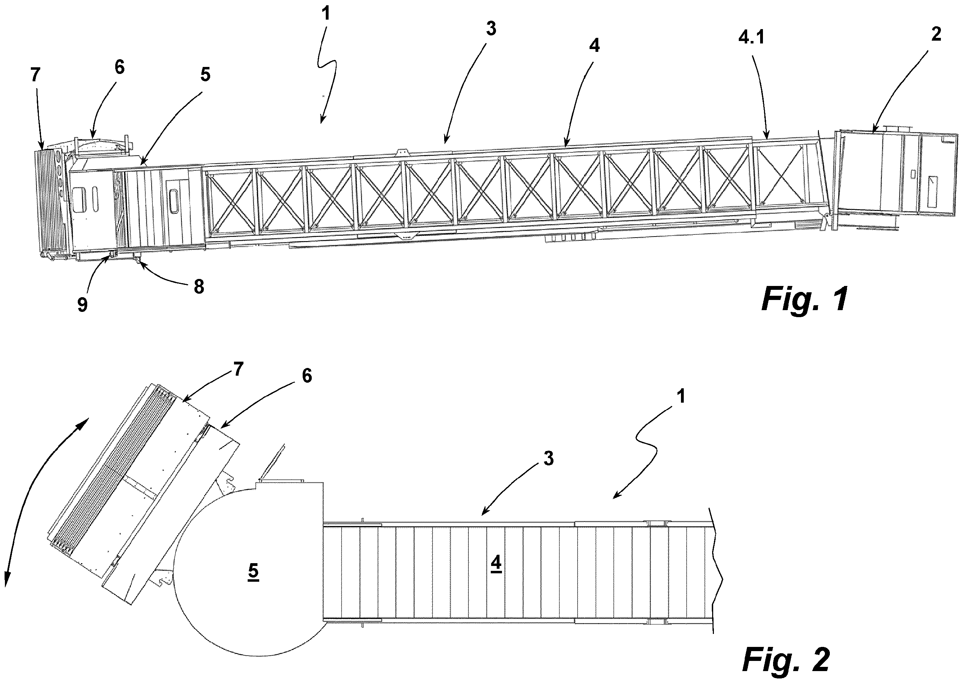

Eine Fluggastbrücke 1 als beispielhafte Einstiegsbrücke umfasst eine terminalseitig angeordnete Rotunde 2. An die Rotunde 2 ist ein bei dem dargestellten Ausführungsbeispiel aus zwei Segmenten gebildeter Passagiertunnel 3 angeschlossen. Die beiden Segmente 4, 4.1 des Passagiertunnels 3 sind teleskopartig gegeneinander verfahrbar wodurch die effektive Länge der Fluggastbrücke 1 eingerichtet werden kann. Der Passagiertunnel 3 führt in einen Brückenkopf 5. Der Brückenkopf 5 ist von außen durch eine Treppe (nicht dargestellt) mit dem Boden verbunden. Über diese kann Bedienpersonal den Brückenkopf 5, ohne den Passagiertunnel 3 benutzen zu müssen, betreten und verlassen. Schwenkbar an den Brückenkopf 5 ist eine Kabine 6 angeschlossen. Die Kabine 6 ist in der Ebene des Bodens des Brückenkopfes 5, wie aus der Draufsicht der Figur 2 durch den Doppelpfeil kenntlich gemacht, verschwenkbar. Die Kabine 6 ist dasjenige Modul, mit dem die Fluggastbrücke 1 an der Außenhaut eines Flugzeuges angedockt wird. Zu diesem Zweck verfügt die Kabine 6 über eine Universalschnittstelle7, welches bezüglich seiner Länge einrichtbar ist, und zwar hinsichtlich seiner unterseitigen und oberseitigen Länge unabhängig voneinander. Sensoren sorgen dafür, dass ein Andocken an die Außenhaut des Rumpfes eines Flugzeuges sanft erfolgt. In der Kabine 6 befindet sich ein Fahrerstand, aus dem die Fluggastbrücke bewegt werden kann.

Zum Ausüben der Schwenkbewegung der Kabine 6 gegenüber dem Brückenkopf 5 dient ein Kettenantrieb. Als Antriebsaggregat dient bei dem dargestellten Ausführungsbeispiel ein Elektromotor 8. Bei dem dargestellten Ausführungsbeispiel ist der Kettenantrieb als Doppelkettenantrieb ausgelegt. Auf der Antriebswelle des Elektromotors 8 sitzen zwei Ritzel, von denen jedes eine der beiden Ketten kämmt. Die beiden Antriebsketten sind brückenkopfseitig gehalten. Endseitig montierte Kettenspanner sorgen für eine gleichbleibende Kettenspannung. Der Elektromotor 8 ist kabinenseitig angeordnet.

Die Kabine 6 ist gegenüber dem Brückenkopf 5 in nicht näher dargestellten Führungen zum Ausüben der genannten Schwenkbewegung geführt.

Dem Kabinenschwenkantrieb ist neben dem aus den vorstehend genannten Komponenten gebildeten Antriebsstrang eine Bremseinrichtung zugeordnet. Die Bremseinrichtung umfasst einen Bremssattel 9.

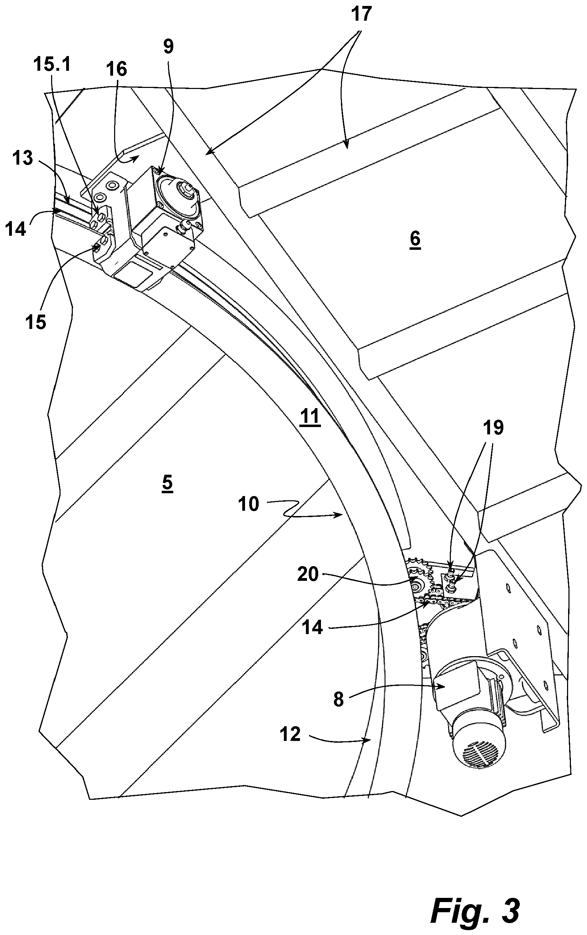

Unterhalb des Bodens des Brückenkopfes 5 ist ein seiner äußeren Kontur folgender Winkel 10 angeordnet. Dieser verfügt über einen in radialer Richtung nach außen ausgestellten Stützflansch 11. An dem Rücken 12 des Winkels 10 sind die beiden Ketten 13, 14 in jeweils einem Kettenkanal geführt. In der in Figur 3 gezeigten Unteransicht im Übergangsbereich von dem Brückenkopf 5 in die Kabine 6 ist der Winkel 10 mit seinem in radialer Richtung nach außen abragenden Stützflansch 11 gut zu erkennen, ebenso wie seine gekrümmte, dem Umriss des Brückenkopfes 5 folgende Erstreckung.

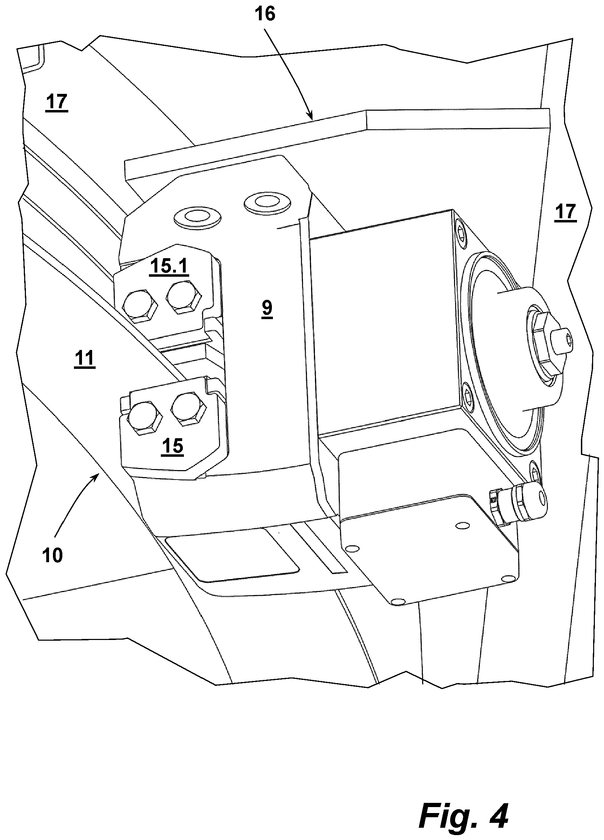

Der Bremssattel 9 verfügt über zwei mit austauschbaren Bremsbelägen ausgerüstete Bremsbacken 15, 15.1. Die Bremsbacken 15, 15.1 wirken mit ihren Bremsbelägen von entgegengesetzten Seiten auf den Stützflansch 11 des Winkels 10. Damit greift der Stützflansch 11 nach Art einer Bremsscheibe - hier: Einer Ringsegmentscheibe - als Ringsegmentkörper zwischen die Bremsbeläge der Bremsbacken 15, 15.1 des Bremssattels 9. Der Bremssattel 9 ist ausgelegt, damit, wenn nicht aktiviert, die Bremsbacken 15, 15.1 geschlossen sind, diese mithin mit ihren Bremsbelägen mit Druck auf den Flachseiten des Stützflansches 11 wirken und infolge dessen eine Verschwenkbewegung der Kabine 6 gegenüber dem Brückenkopf 5 blockiert bzw. verhindert ist. Der Bremssattel 9 des dargestellten Ausführungsbeispiels ist elektromagnetisch arbeitend ausgelegt. Die Bremsbacken 15, 15.1 werden elektromagnetisch zum Lösen bzw. Öffnen des Bremssattels 9 voneinander wegbewegt. Diese Öffnungsbewegung erfolgt gegen die Rückstellkraft von Druckfedern oder Druckfederpaketen. Hierbei kann es sich auch um Tellerfedern bzw. Tellerfederpakete handeln. Geöffnet wird die Bremseinrichtung und damit der Bremssattel 9, wenn der Fahrerstand in der Kabine 6 besetzt und die Kabine 6 gegenüber dem Brückenkopf 5, wie in Figur 2 durch den Doppelpfeil angedeutet, verschwenkt werden soll. Ansonsten bleibt der Bremssattel 9 geschlossen, mithin eine Verschwenkbewegung der Kabine 6 gegenüber dem Brückenkopf 5 blockiert. Die vorbeschriebenen Bestandteile des Bremssattels 9 sind in einer vergrößerten perspektivischen Darstellung auch der Figur 4 zu entnehmen. Der Bremssattel 9 ist mittels einer Flanschplatte 16 an die Bodenstreben 17 der Kabine 6 angeschlossen.

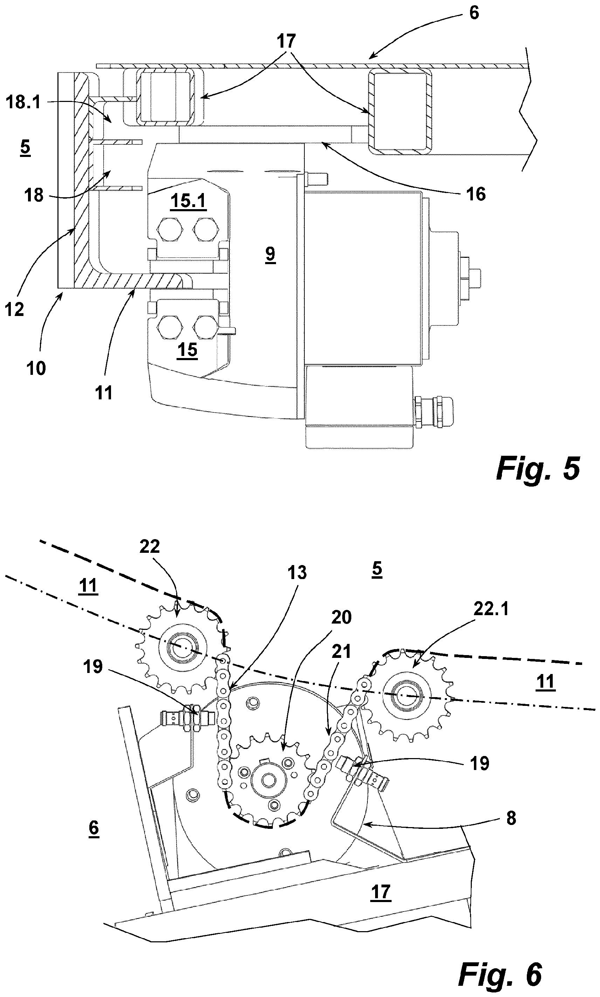

Der in Figur 5 gezeigte Teilquerschnitt zeigt die Anordnung des Bremssattels 9, angeschlossen mit seiner Flanschplatte 16 an die Bodenstreben 17 der Kabine 6 und die Auslegung des Winkels 10 mit seinem zwischen die Bremsbeläge der Bremsbacken 15, 15.1 eingreifenden Stützflansch 11. In diesem Schnitt sind die beiden Kettenkanäle 18, 18.1 erkennbar, in denen die Ketten 13, 14 des Kabinenschwenkantriebes laufen. In Figur 5 sind die Ketten 13, 14 der Einfachheit halber nicht dargestellt.

Bei dem dargestellten Ausführungsbeispiel ist der Bremssattel 9 ausgelegt, mit einer Kraft von mehr als 10 kN, wenn nicht aktiviert, auf den Stützflansch 11 zu wirken. Dies bedeutet, dass die Bremsbeläge mit dieser Klemmkraft auf den Stützflansch 11 wirken. Bei dem dargestellten Bremssattel 9 beträgt die Klemmkraft 12 kN. Die Fläche eines Bremsbelages beträgt bei dem dargestellten Ausführungsbeispiel etwa 44 cm². Die Größe der am Stützflansch 11 anliegende Fläche der Bremsbeläge ist vorzugsweise größer als 30 cm². Eine solche Fläche eines Bremsbelages erlaubt eine Bremswirkung bei Kräften von 10 kN und mehr, die eine Verschwenkbewegung der Kabine 6 gegenüber dem Brückenkopf 5 wirksam blockieren, selbst dann, wenn auf dem Stützflansch 11 Schmierstoffreste durch die Führung der Kabine mittels Rollen vorhanden sind.

Teil der Bremseinrichtung sind des Weiteren mehrere Kettenbruchsensoren 19 (siehe Figur 3). In Figur 3 sind zwei der tatsächlich eingesetzten vier Kettenbruchsensoren 19 zu erkennen.

Der Kettenantrieb der Kabine 6 gegenüber dem Brückenkopf 5 ist in Figur 6 dargestellt. Da die beiden Ketten 13, 14 vertikal übereinander laufen, ist in Figur 6 lediglich die obere Kette 13 zu erkennen. Strichpunktiert ist in dieser Figur der äußere radiale Rand des Stützflansches 11 angedeutet. Der kabinenseitig befestigte Elektromotor 8 kämmt mit je einem Antriebsritzel 20 eine Kette 13, 14. Zu diesem Zweck ist jede Kette 13, 14 in einer Kettenschlaufe 21 geführt. Gebildet wird die Kettenschlaufe 21 durch zwei in Kettenverlaufsrichtung voneinander beabstandete Umlenkritzel 22, 22.1, zwischen denen mit radialem Abstand zu diesen das Antriebsritzel 20 angeordnet ist. Der Kettenverlauf ist mit Ausnahme der Kettenabschnitte zwischen den Umlenkritzeln 22, 22.1 und dem Antriebsritzel 20 gestrichelt angedeutet. Die Kettenbruchsensoren 19, die bei dem dargestellten Ausführungsbeispiel induktiv arbeitende Näherungssensoren sind, sind ausgelegt, den jeweils zwischen einem Umlenkritzel 22 bzw. 22.1 und dem Antriebsritzel 20 befindlichen Kettenstrangabschnitt hinsichtlich des Abstandes der Kette von dem Sensorkopf des Kettenbruchsensors 19 zu überwachen. Ist die Kette 13 bzw. 14 bestimmungsgemäß gespannt, befindet sich diese in einem vorgegebenen Abstand zum Sensorkopf des jeweiligen Kettenbruchsensors 19. Bei einem Kettenbruch lässt die Kettenspannung schlagartig nach, wodurch der Abstand des von dem Kettenbruchsensor 19 überwachten Kettenabschnittes sich schlagartig verändert. Die Kettenbruchsensoren 19 sind ebenso wie der Bremssattel 9 an die Steuereinheit der Kabine 6 angeschlossen. Die von den Kettenbruchsensoren 19 erfassten Daten werden von der Steuereinheit ausgewertet. Diese den Sensoreingang der Steuereinheit beaufschlagenden IST-Kettenpositionen (entsprechend der IST-Kettenspannung) werden mit einer SOLL-Kettenposition (Abstand der Kette von dem Sensorkopf) verglichen. Vordefiniert ist ebenfalls ein Schwellwert einer Kettenpositionsabweichung. Wird dieser Schwellwert überschritten, wird, falls der Bremssattel 9 zum Öffnen der Bremsbacken 15, 15.1 aktiviert ist, der Bremssattel 9 deaktiviert mit der Folge, dass die Bremsbacken 15, 15.1 aufgrund der in den Rückstellfedern gespeicherten Energie spontan schließen und damit eine Verschwenkbewegung der Kabine 6 gegenüber dem Brückenkopf 5 nicht mehr möglich ist. Eine Abstandsänderung einer Kette 13, 14 von dem Sensorkopf eines Kettenbruchsensors 19 kann positiv oder negativ sein. Bei einem Kettenbruch kann es durchaus vorkommen, dass die Kette schlägt und IST-Positionsänderungen in beiden Richtungen erfolgen.

Der unteren Kette 14 sind ebenfalls zwei Kettenbruchsensoren 19 zugeordnet (siehe hierzu auch Figur 3), die in gleicher Weise arbeiten und die Steuereinheit beaufschlagen.

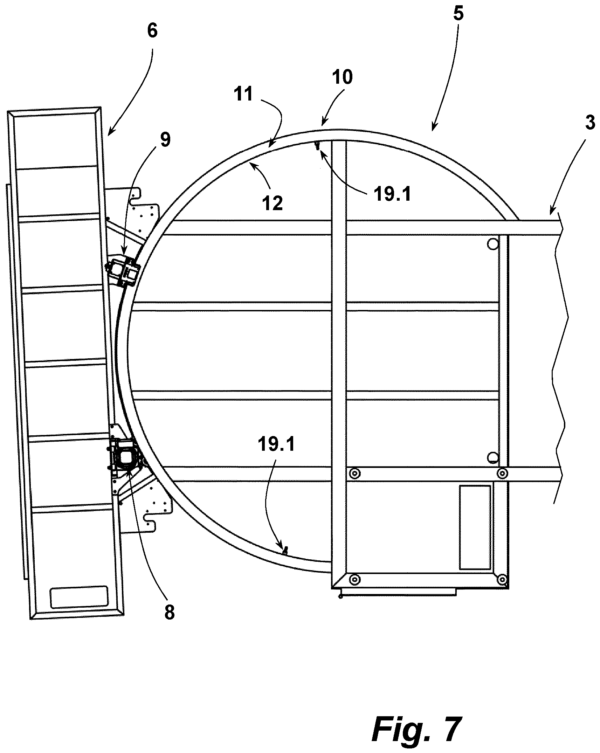

Die Unteransicht der Fluggastbrücke 1 lässt erkennen, dass an dem Rücken 12 des Winkels 10 auch brückenkopfseitig zwei Kettenbruchsensoren 19.1 vorgesehen sind. Diese beiden weiteren Kettenbruchsensoren 19.1 sind jeweils je Kettenkanal 18, 18.1 an den in Figur 7 gekennzeichneten Stellen vorgesehen. Die beiden Kettenbruchsensoren 19.1 sind jeweils mit einem unterschiedlichen Winkelabstand zu dem Ende der Kette angeordnet.

Die Kettenbruchsensoren 19, 19.1 sind in Reihe geschaltet, sodass eine Blockierung der Kabine 6 gegenüber dem Brückenkopf 5 ausgelöst wird, sobald durch einen der Kettenbruchsensoren 19, 19.1 ein Kettenspannungsverlust detektiert wird.

Durch die Bremseinrichtung ist die Betriebssicherheit einer Schwenkbewegung der Kabine 6 gegenüber dem Brückenkopf 5 signifikant verbessert, da ein Fehler im Antriebsstrang, der zu einer Änderung der Kettenspannung führt, wie beispielsweise ein Kettenbruch oder ein Antriebswellenbruch, spontan zu einem Schließen der Bremsbacken 15, 15.1 des Bremssattels 9 führt, sollte die Bremseinrichtung geöffnet und somit der Fahrerstand in der Kabine 6 besetzt sein. Gleichermaßen wird bei einer Inbetriebnahme der Fluggastbrücke 1 zum Bewegen derselben geprüft, ob die Ketten 13, 14 sich in den von den Kettenbruchsensoren 19, 19.1 beobachteten Kettenabschnitten in dem vordefinierten Abstand zu den Messköpfen der Kettenbruchsensoren 19, 19.1 befinden. Ist dieses nicht der Fall, wird eine Verschwenkbewegung der Kabine 6 gegenüber dem Brückenkopf 5 nicht freigegeben, mithin der Bremssattel 9 nicht geöffnet. Begleitet ist dieses von einer für das Bedienpersonal erkennbaren Fehlermeldung.

Die Erfindung ist anhand von Ausführungsbeispielen beschreiben worden. Ohne den Umfang der geltenden Ansprüche zu verlassen, ergeben sich für einen Fachmann zahlreiche weitere Möglichkeiten, diese umzusetzen, ohne dass diese weiteren Möglichkeiten im Einzelnen näher beschrieben werden müssten.

### Bezugszeichenliste

- 1: Fluggastbrücke
- 2: Rotunde
- 3: Passagiertunnel
- 4, 4.1: Segment
- 5: Brückenkopf
- 6: Kabine
- 7: Universalschnittstelle
- 8: Elektromotor
- 9: Bremsenöffnungsaktor/Bremssattel
- 10: Winkel
- 11: Stützflansch
- 12: Rücken
- 13: Kette
- 14: Kette
- 15, 15.1: Bremsbacke
- 16: Flanschplatte
- 17: Bodenstrebe
- 18, 18.1: Kettenkanal
- 19, 19.1: Kettenbruchsensor
- 20: Antriebsritzel
- 21: Kettenschlaufe
- 22, 22.1: Umlenkritzel

## Patentansprüche

1. Einstiegsbrücke mit einem Brückenkopf (5) mit einem Passergiertunnel (3), mit einem Kabinenschwenkantrieb und mit einer um einen Abschnitt des Brückenkopfes (5) mittels des Kabinenschwenkantriebes verschwenkbaren Kabine (6), welcher Kabinenschwenkantrieb als Kettenantrieb ausgelegt ist, und einen motorischen Antrieb (8) umfasst, wobei zumindest eine Kette (13, 14) brückenkopfseitig gehalten und der motorische Antrieb (8) mit einem die Kette (13, 14) kämmenden Antriebsritzel (20) kabinenseitig angeordnet sind, wobei dem Kabinenschwenkantrieb eine die Schwenkbarkeit der Kabine (6) gegenüber dem Brückenkopf (5) blockierende Bremseinrichtung zugeordnet ist, die durch einen an eine Steuereinheit angeschlossenen und von dieser Schaltbefehle empfangenden Bremsenöffnungsaktor (9) gegen eine Rückstellkraft geöffnet werden kann und die bei deaktiviertem Bremsenöffnungsaktor (9) durch die durch den Öffnungsvorgang gespeicherte Rückstellkraft selbsttätig schließt, **dadurch gekennzeichnet, dass** die Bremseinrichtung einen nach Art einer Scheibenbremse arbeitenden, kabinenseitig gehaltenen Bremssattel als Bremsenöffnungsaktor (9) mit zwei Bremsbeläge tragenden Bremsbacken (15, 15.1) und einen zwischen die Bremsbeläge eingreifenden brückenkopfseitig angeordneten, scheibenförmigen Ringsegmentkörper (11) umfasst, gegen den die Bremsbacken (15, 15.1) mit ihren Bremsbelägen bei deaktiviertem Bremssattel (9) zum Blockieren einer Schwenkbewegung der Kabine (6) gegenüber dem Brückenkopf (5) wirken und von dem die Bremsbacken (15, 15.1) mit ihren Bremsbelägen bei aktiviertem Bremssattel (9) gelöst sind.

2. Einstiegsbrücke nach Anspruch 1, **dadurch gekennzeichnet, dass** die Bremseinrichtung zumindest einen an die Steuereinheit angeschlossenen Kettenbruchsensor (19) zum Erfassen der IST-Position der zumindest einen Kette des Kabinenschwenkantriebes umfasst und dass die Steuereinheit eingerichtet ist, die aktuell erfasste IST-Position der Kette mit einer SOLL-Kettenposition zu vergleichen und bei einer einen vorgegebenen Schwellwert überschreitenden Abweichung der IST-Position von der SOLL-Position ein Steuerbefehl zum Deaktivieren des Bremsenöffnungsaktors (9) abzusetzen.

3. Einstiegsbrücke nach Anspruch 2, **dadurch gekennzeichnet, dass** die zumindest eine Kette (13, 14) über eine durch zwei in Längserstreckung der Kette (13, 14) voneinander beabstandete Kettenumlenkkörper (22, 22.1) und dem zwischen diesen angeordneten Antriebsritzel (20) gebildete Kettenschlaufe (21) um das Antriebsritzel (20) des Kabinenschwenkantriebes gelegt ist und dass zwischen einem der Kettenumlenkkörper (22, 22.1) und dem Antriebsritzel (20) der Kettenbruchsensor (19) zum Überwachen der IST-Position der Kette in diesem Kettenstück angeordnet ist.

4. Einstiegsbrücke nach Anspruch 3, **dadurch gekennzeichnet, dass** zwischen beiden Umlenkkörpern (22, 21) und dem Antriebsritzel (20) jeweils ein Kettenbruchsensor (19) angeordnet ist.

5. Einstiegsbrücke nach Anspruch 3 oder 4, **dadurch gekennzeichnet, dass** zumindest ein weiterer Kettenbruchsensor (19.1) brückenkopfseitig angeordnet ist.

6. Einstiegsbrücke nach Anspruch 5, **dadurch gekennzeichnet, dass** die zusätzlichen Kettenbruchsensoren (19.1) mit einem unterschiedlichen Winkelabstand zum jeweiligen Kettenende an dem Ringsegmentkörper (11) befestigt sind.

7. Einstiegsbrücke nach einem der Ansprüche 4 bis 6, **dadurch gekennzeichnet, dass** die Kettenbruchsensoren (19, 19.1) in Reihe geschaltet sind.

8. Einstiegsbrücke nach einem der Ansprüche 1 bis 7, **dadurch gekennzeichnet, dass** der Ringsegmentkörper der Bremseinrichtung der horizontale, in radialer Richtung nach außen weisender Stützflansch (11) einer Führung der Kabine (6) am Brückenkopf (5) ist.

9. Einstiegsbrücke nach einem der Ansprüche 1 bis 8, **dadurch gekennzeichnet, dass** der Bremsenöffnungsaktor (9) elektromagnetisch oder elektromotorisch arbeitend ausgelegt ist.

10. Einstiegsbrücke nach einem der Ansprüche 1 bis 8, **dadurch gekennzeichnet, dass** der Bremsenöffnungsaktor hydraulisch oder pneumatisch arbeitend ausgelegt ist.

11. Einstiegsbrücke nach einem der Ansprüche 1 bis 10, **dadurch gekennzeichnet, dass** zum Speichern der Rückstellkraft eine oder mehrere Druckfedern und/oder ein oder mehrere Druckfederpakete, jeweils auf eine Bremsbacke (15, 15.1) wirkend, vorgesehen sind.

12. Einstiegsbrücke nach einem der Ansprüche 2 bis 7, **dadurch gekennzeichnet, dass** der zumindest eine Kettenbruchsensor (19) ein induktiv arbeitender Näherungssensor ist.

13. Einstiegsbrücke nach einem der Ansprüche 1 bis 12, **dadurch gekennzeichnet, dass** diese als Fluggastbrücke ausgeführt ist.

## Claims

1. Boarding bridge with a bridge head (5), with a passenger tunnel (3), with a cabin slewing drive unit, and with a cabin (6), which can be slewed about a section of the bridge head (5) by means of the cabin slewing drive unit, said cabin slewing drive unit being configured as a chain drive and comprising a motor drive (8), wherein at least one chain (13, 14) is held on the bridge head side, and the motor drive (8), with a drive pinion (20) meshing with one of the chains (13, 14) is arranged on the cabin side, wherein a braking device is assigned to the cabin slewing drive, blocking the slewing capacity of the cabin (6) in relation to the bridge head (5), this braking device being capable of being opened against a resetting force by a brake opening actuator (9) connected to a control unit and receiving switching commands from this unit, and, with the brake opening actuator (9) deactivated, closes automatically due to the resetting force stored by the opening procedure, **characterised in that** the braking device comprises a brake calliper held on the cabin side, operating in the manner of a disk brake, as a brake opening actuator (9), with two brake blocks (15 15.1) carrying brake pads, and a disk-shaped ring segment body (11), arranged on the bridge head side and engaging between the brake pads, against which the brake blocks (15, 15.1) with their brake pads take effect, with the braking calliper (9) deactivated, in order to block a slewing movement of the cabin (6) in relation to the bridge head (5), and of which the brake blocks (15, 15.1) with their brake pads are released when the brake calliper (9) is activated.

2. Boarding bridge according to claim 1, **characterised in that** the braking device comprises at least one chain break sensor (19), connected to the control unit, for detecting the ACTUAL position of the at least one chain of the cabin slewing drive, and that the control unit is configured such as to compare the ACTUAL position of the chain as detected at the present time with a REFERENCE chain position, and, in the event of a deviation of the ACTUAL position from the REFERENCE position which exceeds a predetermined threshold value, issues a control command for deactivating the brake opening actuator (9).

3. Boarding bridge according to claim 2, **characterised in that** the at least one chain (13, 14) is laid around the drive pinion (20) of the cabin slewing drive, by means of a chain loop (21) which is formed by two chain deflecting bodies (22, 22.1), spaced at a distance from one another in the longitudinal extension of the chain (13, 14), and the drive pinion (20) arranged between these, and that the chain break sensor (19) for monitoring the ACTUAL position of the chain in this piece of chain is arranged between one of the chain deflection bodies (22, 22.1) and the drive pinion (20).

4. Boarding bridge according to claim 3, **characterised in that** in each case a chain break sensor (19) is arranged between two deflecting bodies (22, 21) and the drive pinion (20).

5. Boarding bridge according to claim 3 or 4, **characterised in that** at least one further chain break sensor (19.1) is arranged on the bridge head side.

6. Boarding bridge according to claim 5, **characterised in that** the additional chain break sensors (19.1) are secured to the ring segment body (11) with a different angular distance at the respective chain end.

7. Boarding bridge according to any one of claims 4 to 6, **characterised in that** the chain break sensors (19, 19.1) are arranged in a row.

8. Boarding bridge according to any one of claims 1 to 7, **characterised in that** the ring segment body of the braking device is the horizontal support flange (11), pointing outwards in the radial direction, of a guide of the cabin (6) at the bridge head (5).

9. Boarding bridge according to any one of claims 1 to 8, **characterised in that** the brake opening actuator (9) is configured as operating electromagnetically or as an electric motor.

10. Boarding bridge according to any one of claims 1 to 8, **characterised in that** the brake opening actuator is configured as operating hydraulically or pneumatically.

11. Boarding bridge according to any one of claims 1 to 10, **characterised in that,** in order to store the resetting force, provision is made for one or more pressure springs and/or one or more pressure spring packets, in each case taking effect on a brake block (15, 15.1).

12. Boarding bridge according to any one of claims 2 to 7, **characterised in that** the at least one chain break sensor (19) is an inductively operating proximity sensor.

13. Boarding bridge according to any one of claims 1 to 12, **characterised in that** it is configured as an air passenger bridge.

## Revendications

1. Passerelle d'embarquement comportant une tête d'accostage (5), un tunnel passagers (3), un entraînement pivotant de cabine et une cabine (6) qui pivote sur un tronçon de la tête d'accostage (5) grâce à l'entraînement pivotant de cabine, lequel entraînement pivotant de cabine est conformé en entraînement à chaîne et comprend un entraînement motorisé (8), au moins une chaîne (13, 14) étant maintenue du côté de la tête d'accostage et l'entraînement motorisé (8), avec un pignon d'entraînement (20) qui s'engage dans la chaîne (13, 14), étant disposé du côté de la cabine, un dispositif de freinage étant affecté à l'entraînement pivotant de cabine, qui bloque le pivotement de la cabine (6) par rapport à la tête d'accostage (5), lequel dispositif de freinage peut être ouvert contre une force de rappel par un actionneur (9) d'ouverture des freins raccordé à une unité de commande et réceptionnant des instructions de commutation de cette dernière et qui se ferme de manière autonome lors de la désactivation de l'actionneur (9) d'ouverture des freins grâce à la force de rappel emmagasinée lors du processus d'ouverture, **caractérisée en ce que** le dispositif de freinage comporte, en guise d'actionneur (9) d'ouverture des freins, un étrier de frein maintenu du côté de la cabine, fonctionnant à la manière d'un frein à disque, avec deux mâchoires de freinage (15, 15.1) supportant des garnitures de frein et un corps (11) de segment annulaire en forme de disque, s'engageant entre les garnitures, disposé du côté de la tête d'accostage, contre lequel agissent les mâchoires de freinage (15, 15.1) avec leurs garnitures de frein lorsque l'étrier de frein (9) est désactivé afin de bloquer un mouvement pivotant de la cabine (6) par rapport à la tête d'accostage (5) et dont les mâchoires de freinage (15, 15.1) avec leurs garnitures de freins sont détachées lorsque l'étrier de frein (9) est activé.

2. Passerelle d'embarquement selon la revendication 1, **caractérisée en ce que** le dispositif de freinage comporte au moins un détecteur (19) de rupture de chaîne raccordé à l'unité de commande afin de détecter la position RÉELLE de l'au moins une chaîne de l'entraînement pivotant de cabine, et **en ce que** l'unité de commande est paramétrée pour comparer la position RÉELLE de la chaîne actuellement détectée avec une position DE CONSIGNE de la chaîne, et pour exécuter une instruction de désactivation de l'actionneur (9) d'ouverture des freins s'il devait y avoir une divergence entre la position RÉELLE et la position DE CONSIGNE qui dépasserait une valeur de seuil préalablement définie.

3. Passerelle d'embarquement selon la revendication 2, **caractérisée en ce que** l'au moins une chaîne (13, 14) est posée autour du pignon d'entraînement (20) de l'entraînement pivotant de cabine par le biais d'une boucle de chaîne (21), qui passe sur deux éléments de renvoi de la chaîne (22, 22.1) disposés à distance l'un de l'autre dans le sens de l'étendue longitudinale de la chaîne (13, 14) et sur le pignon d'entraînement (20) disposé entre les deux précédents, et **en ce que** le détecteur (19) de rupture de chaîne destiné à surveiller la position RÉELLE de la chaîne dans ce tronçon de chaîne est disposé entre l'un des éléments de renvoi de la chaîne (22, 22.1) et le pignon d'entraînement (20).

4. Passerelle d'embarquement selon la revendication 3, **caractérisée en ce qu'**un détecteur (19) de rupture de chaîne est disposé respectivement entre les deux éléments de renvoi (22, 21) et le pignon d'entraînement (20).

5. Passerelle d'embarquement selon la revendication 3 ou 4, **caractérisée en ce qu'**au moins un détecteur (19.1) de rupture de chaîne supplémentaire est disposé du côté de la tête d'accostage.

6. Passerelle d'embarquement selon la revendication 5, **caractérisée en ce que** les détecteurs (19.1) de rupture de chaîne supplémentaires sont fixés sur le corps (11) de segment annulaire avec un écart angulaire différent par rapport à l'extrémité de la chaîne considérée.

7. Passerelle d'embarquement selon l'une des revendications 4 à 6, **caractérisée en ce que** les détecteurs (19, 19.1) de rupture de chaîne sont connectés en série.

8. Passerelle d'embarquement selon l'une des revendications 1 à 7, **caractérisée en ce que** le corps de segment annulaire du dispositif de freinage est la bride d'appui (11) horizontale, orientée dans le sens radial vers l'extérieur, d'un guide de cabine (6) sur la tête d'accostage (5).

9. Passerelle d'embarquement selon l'une des revendications 1 à 8, **caractérisée en ce que** l'actionneur (9) d'ouverture des freins est conformé pour fonctionner de manière électromagnétique ou par motorisation électrique.

10. Passerelle d'embarquement selon l'une des revendications 1 à 8, **caractérisée en ce que** l'actionneur d'ouverture des freins est conformé pour fonctionner hydrauliquement ou pneumatiquement.

11. Passerelle d'embarquement selon l'une des revendications 1 à 10, **caractérisée en ce qu'**il est prévu, pour emmagasiner la force de rappel, un ou plusieurs ressorts de compression et/ou un ou plusieurs blocs de ressorts de compression destinés à agir respectivement sur une mâchoire de frein (15, 15.1).

12. Passerelle d'embarquement selon l'une des revendications 2 à 7, **caractérisée en ce que** l'au moins un détecteur (19) de rupture de chaîne est un détecteur de proximité fonctionnant de manière inductive.

13. Passerelle d'embarquement selon l'une des revendications 1 à 12 **caractérisée en ce que** celle-ci est conformée en tant que passerelle aéroportuaire à l'usage de passagers.
